# EUROPEAN PATENT SPECIFICATION

(11) **EP 1 825 176 B1**
(45) Date of publication and mention of the grant of the patent: **04.03.2009**
(21) Application number: 05818081.1
(22) Date of filing: 12.12.2005
(51) Int. Cl.: F16K 5/20, E21B 34/06

(54) **AXIALLY ENERGISABLE BALL VALVE**
AXIAL ERREGBARES KUGELVENTIL
CLAPET À BILLE À ACTIONNEMENT AXIAL

(30) Priority: 15.12.2004 GB 0427400
(43) Date of publication of application: 29.08.2007
(73) Proprietor: Enovate Systems Limited, Kirkhill Industrial Estate, Dyce Aberdeen, AB21 0GL (GB)
(72) Inventor: COWIE, Gavin David, Aberdeen AB31 5TN (GB); EDWARDS, Jeffrey Charles, Aberdeen AB25 1NL (GB)
(74) Representative: Naismith, Robert Stewart
(86) International application number: PCT/GB2005/004805
(87) International publication number: WO 2006/064215

(56) References cited:
- FR-A- 2 567 232
- GB-A- 1 235 647
- US-A- 3 124 333
- US-A- 3 901 315
- US-A- 4 693 451
- US-A- 5 265 845

## Description

The present invention relates to ball valves and particularly to metal sealing ball valves.

Apertured ball valves are well known for controlling the flow of a fluid through a bore, particularly in the oil and chemical process industries. Ball valves are compact, inexpensive and relatively easy to operate.

In an apertured ball valve, the valve operation may be broken down into two separate stages; firstly, the ball moves between an open and a closed position by rotating through 90° such that the ball aperture moves from an orientation coaxial with the flow direction, i.e. when the valve is open, to a position whereby the ball aperture is perpendicular to the flow direction. Secondly, the valve seals in the closed position to prevent flow through the bore across the ball valve.

Conventional ball valves will typically incorporate a seal made of a softer material such as polyetheretherketone (PEEK) or polytetrafluoroethylene (PTFE). However, these materials are vulnerable to degradation over the course of time, and consequently the valve may become unreliable.

In situations requiring the highest sealing integrity to be maintained, metal sealing valves such as gate valves are typically used. These valves are generally larger and more expensive than a ball valve of the equivalent bore size and pressure rating. In certain situations, such as wellhead and in-riser applications, it may be impossible to incorporate a gate valve to provide a metal seal due to the envelope restrictions. In these situations it is common to use a plug type device which incorporates a metal-to-metal seal on which is deployed wireline or coiled tubing. This method of deployment is cumbersome, time consuming and expensive.

Further drawbacks associated with ball valves include problems of distortion of the ball under high pressure due to the presence of a bore through the ball. This distortion can prevent a high integrity seal from being formed between the ball element and the valve housing.

US 5,265,845, US 4,693,451 and US 3,124,333 all disclose valves having a pair of closure devices which are moved towards respective valve seats in a valve closed position by the use of separate cam members. FR 2567232 describes a ball valve having sealing surfaces of increasing radius from a centre of the ball such that as the ball is rotated the engagement of each sealing surface with its respective seal seat becomes tighter as the throughbore closed position is approached.

It is an object of the present invention to obviate or mitigate at least one of the aforementioned disadvantages.

According to a first aspect of the present invention there is provided a ball valve for sealing a conduit comprising:
a housing having a throughbore and a valve seat; an apertured ball element mounted within the housing, the apertured ball element being rotatable about an axis of rotation between a throughbore open and a throughbore closed position, the apertured ball element having a first portion and a second portion coupled together, said first and second portions being rotatable and moveable relative to each other, said first portion having a sealing surface for engaging with said valve seat;
whereby, in use, in the throughbore closed position, the second portion is moveable relative to said first portion to axially displace the first portion from the axis of rotation towards the valve seat such that said sealing surface on the first portion of the apertured ball forms a seal with valve seat.

Thus, the ball valve of the present invention has a two-portion ball element which is rotatable into the throughbore closed position and the structure is such that continued rotational force causes the second portion to continue to rotate relative to the first portion and convert the rotational force to an axial force which is applied by the second portion to the first portion to make the seal between the first portion sealing surface and the valve seat. This reduces degradation of both the sealing surface of the first portion of the apertured ball and the valve seat.

Furthermore, using a two-part ball element means that the stiffness of the portion which makes the seal, i.e. the first portion, is improved, resulting in less distortion of the sealing surface in high pressure situations.

Preferably, the second portion is adapted to axially displace the first portion from the axis of rotation by a further rotation of the second portion with respect to the first portion.

Preferably, the valve seat and the sealing surface on the first portion of the aperture ball is a metal. Alternatively, at least one of the valve seat and the sealing surface on the first portion of the apertured ball is a polymeric or elastomeric material. In a further alternative, a non-elastomer such as PTFE could be used. Having both the valve seat and sealing surface made from a metal, means that a high integrity metal-to-metal seal may be formed by the ball valve.

The sealing surface may be a combination of materials. In one implementation the sealing surface on the first portion of the apertured ball comprises both a metal and a non-metal. Multiple sealing methods may provide increased reliability of the valve.

The sealing surface of the first portion of the apertured ball may be non-spherical. Preferably, the sealing surface of the first apertured ball portion is substantially conical.

Having the first portion of the apertured ball forming a seal with the valve seat by an axial translation of the first portion onto the valve seat allows the sealing surface of the first portion to have a non-spherical finish. A non-spherical surface, particularly a conical surface, is preferred because it is considerably easier to machine a surface of sufficient quality to form a high integrity seal when the surface is non-spherical.

Preferably, the sealing surface of the first portion of the apertured ball is provided on an element mounted to the first apertured ball portion. This sealing surface element may be a disc.

A separate sealing surface element mounted to the first portion of the ball allows for the sealing surface to be manufactured separately from the ball.

The valve seat may also have a non-spherical surface. The valve seat surface is substantially complementary to the sealing surface of the first ball portion. Most preferably, the valve seat surface is substantially conical. The valve seat may be formed integrally with the housing. Alternatively, the valve seat may be releasably connected to the housing.

Preferably, the sealing surface element is releasably mounted to the first portion of the apertured ball element.

Having the sealing surface element releasably mounted to the ball, permits the element to float into engagement with the valve seat. This feature is useful in the event that the ball should distort, as this distortion may not affect the sealing performance of the valve.

Each of the first portion and the second portion may comprise a plurality of parts.

Preferably, the first and second portions are connected by connection means. Most preferably, the connection means is a c-spring.

A c-spring connecting the first and second portions ensures the two portions rotate together when permitted.

The first and second portions may be releasably connected.

Preferably, the ball valve includes biasing means to bias the first portion towards the second portion.

The use of biasing means permits the first portion to move towards the second portion in an axial direction when the force applied by the second portion is removed. Such an axial movement allows the ball to rotate to the throughbore open position.

The biasing means may be a c-spring.

Preferably, the connecting c-spring is also the biasing c-spring.

Preferably, the ball valve further includes rotation means to rotate the apertured ball between the throughbore open position and the throughbore closed position.

The rotation means may be associated only with the second portion of the apertured ball.

Preferably, the second portion is adapted to axially displace the first portion by means of a cam surface on one of the first or second portions engaging a follower surface on the other of the first or second portions.

Preferably, the cam surface is on the second portion and the follower surface is on the first portion.

Alternatively, the second portion is adapted to axially displace the first portion by means of a separate camming plate, the separate camming plate having a first pin and a second pin extending therefrom, the first pin engaging an annular slot in the surface of the first apertured ball portion, and the second pin engaging an annular slot in the surface of the second apertured ball portion. In this implementation, the slots are selected to cause the required rotational and axial response in the first and second apertured ball portions.

According to a second aspect of the present invention there is provided a method of sealing a throughbore through a housing by an apertured ball valve, the method comprising the steps of:
rotating an apertured ball element from a throughbore open position to a throughbore closed position;
rotating a second portion of the apertured ball element relative to a first portion of the apertured ball element when in said throughbore closed position and axially displacing said first portion onto a valve seat.
whereby said first portion of the apertured ball element is urged into a sealing engagement with a valve seat.

According to a third aspect of the present invention there is provided a ball valve for sealing a conduit with a metal-to-metal seal, such ball valve comprising:
a housing having a throughbore and a valve seat;
an apertured ball element rotatably mounted within said housing between a throughbore open position and a throughbore closed position, said apertured ball element having first and second ball element portions, said portions being moveable relative to each other when said apertured ball valve is in said throughbore closed position;
a metal seal adapted to be disposed between said first ball element portion and said valve seat when said apertured ball element is in said throughbore closed position;
the arrangement being such that, in use, when said apertured ball valve element is in said throughbore closed position, further rotation of said second ball element portion engages with said first ball element portion and displaces said first ball element portion axially to energise said metal seal against said valve seat to provide a ball valve with an energised metal-to-metal seal.

By virtue of the present invention a conduit may be sealed by a ball valve incorporating a metal-to-metal seal.

The present invention will now be described, by way of example, with reference to the accompanying figures in which:
Figure 1 is a partially cut-away side view of a ball valve in a closed configuration in accordance with a preferred embodiment of the present invention;
Figure 2 is an enlarged perspective view of the first portion of the apertured ball of Figure 1;
Figure 3 is an enlarged perspective view of the second portion of the apertured ball of Figure 1;
Figure 4, comprising Figures 4a to 4d, is a series of sectional side views of the ball valve of Figure 1, drawn on a reduced scale, depicting the movement of the apertured ball from a throughbore open position to a throughbore closed position;
Figure 5 is an enlarged cut away side view of part of the ball valve of Figure 1;
Figure 6, comprising Figures 6a and 6b, is a cut away side view of rotary actuator for rotating the apertured ball of Figure 1;
Figure 7 is a perspective view of part of a ball valve in accordance with an alternative embodiment of the present invention;
Figure 8 is a perspective view of the ball of the ball valve of Figure 7; and
Figure 9 is a perspective view of the camming plate of the ball valve of Figure 7.

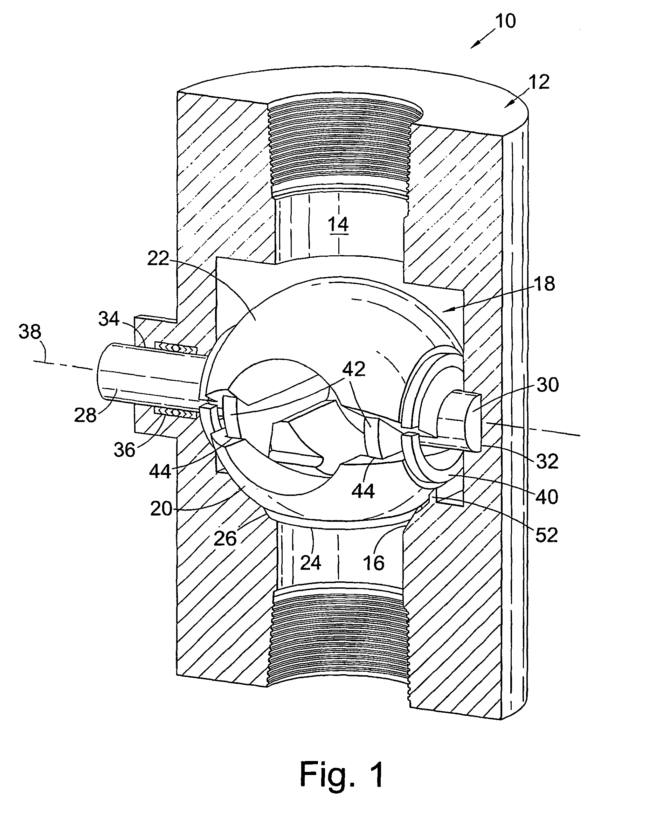

Referring firstly to Figure 1 there is shown a partially cut-away side view of a ball valve, generally indicated by reference numeral 10, in a closed configuration in accordance with the preferred embodiment of the present invention.

The ball valve 10 comprises a housing 12 defining a throughbore 14 and having a valve seat 16. Mounted within the housing 12 is an apertured ball 18. The apertured ball 18 comprises a first portion 20 and a second portion 22.

The first portion 20 includes a sealing element 24 with an annular, conical, sealing surface 26, the sealing element 24 is mounted to the first portion 20 and is machined from Inconel 625, a corrosion resistant alloy. The valve seat 16 is also conical in shape and is substantially complementary to the conical surface 26 of the sealing element 24.

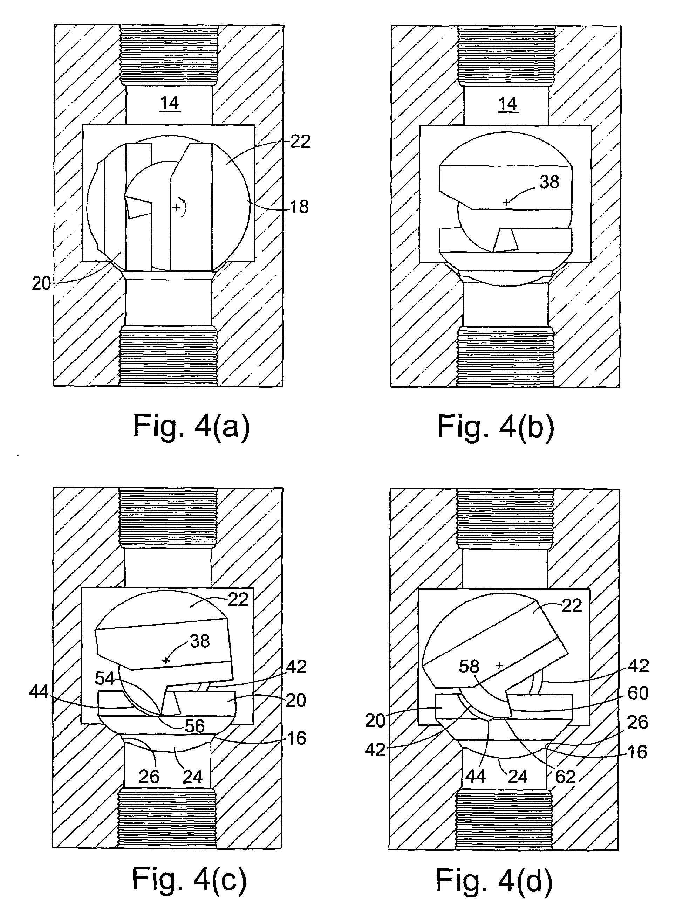

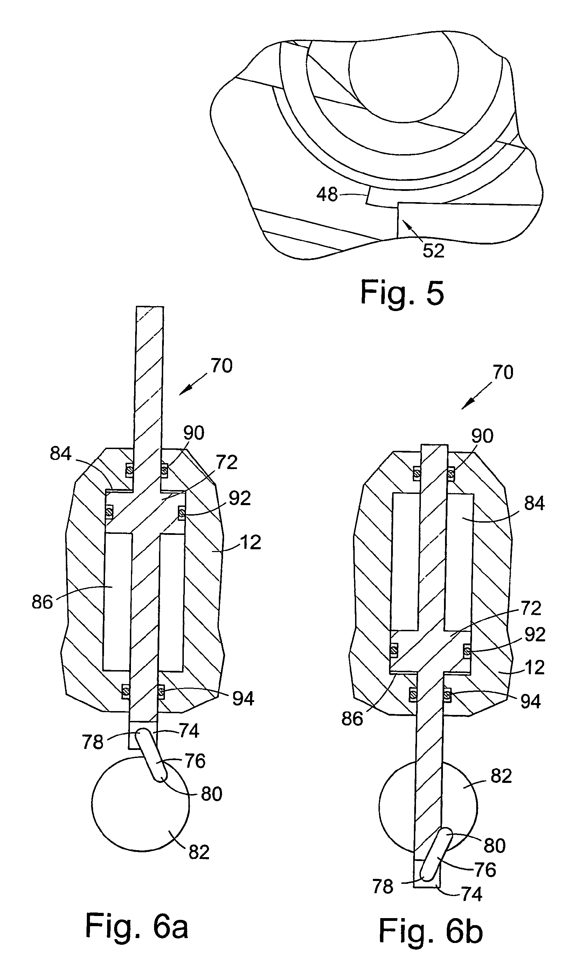

The second portion 22 of the apertured ball 18 incorporates a shaft portion 28 via which the apertured ball 18 is rotated about an axis of rotation 38 by a rotary actuator (not shown), as discussed below, in connection with Figure 6. The shaft 28 passes through a conduit 34 in the housing and is sealed to the housing by means of packing seals 36. The second portion 22 also includes a lug 30 which engages a pocket 32 in the housing 12. The location of the lug 30, the pocket 32, the shaft 28 and the conduit 34 serve to positionally locate the second ball portion 22 with respect to the housing 22. Rotation of the shaft 28 around the axis of rotation 38 causes the second ball portion 22 to rotate into the throughbore open position. The first ball portion 20 is connected to the second ball portion 22 by means of c-spring 40. The c-spring 40 is biased to squeeze the first portion 21 and the second portion 22 together such that they behave substantially as a single ball element. The operation of the ball valve 10 will be discussed in greater detail in connection with Figure 4 and Figure 5.

Also visible on Figure 1 is a nogo 52 which engages the first portion 20 of the apertured ball to prevent rotation of the first portion 20 passed the throughbore closed position. This operation will also be discussed in greater detail in connection with Figure 4 and Figure 5.

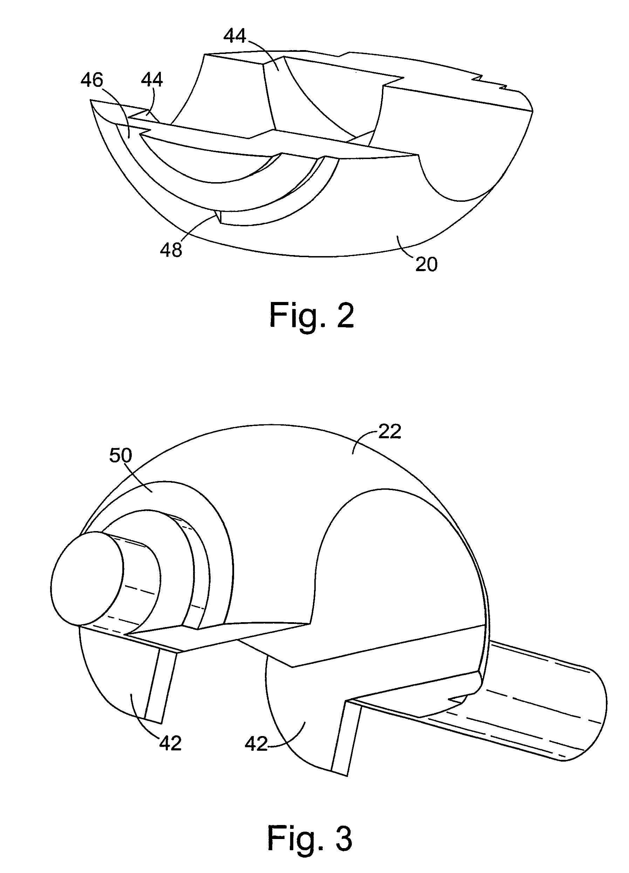

The second ball portion 22 includes a pair of cam surfaces 42, and the first ball portion 20 includes a pair of follower surfaces 44. The follower surfaces 44 can be seen more clearly on Figure 2, a perspective view of the first portion 20 of the apertured ball 18. Also visible on Figure 2 is a shoulder 46 for receiving the c-spring 40 (shown on Figure 1). The first ball portion 20 also includes a stop surface 48 which engages the nogo 52 (Figure 1), as will be discussed in connection with Figures 4 and 5.

The cam surfaces 42 can be seen in Figure 3, a perspective view of the second portion 22 of the apertured ball 18. The second portion 22 also includes a shoulder 50 for receiving the c-spring 40.

Referring now to Figure 4, comprising Figures 4a to 4d, there is shown a series of sectional side views of the ball valve 10 depicting the movement of the apertured ball 18 from a throughbore open position to a throughbore closed position.

Referring firstly to Figure 4a, the apertured ball 18 is shown in the throughbore 14 open position. To commence sealing of the throughbore 14 the shaft 38 (not visible on Figure 4) is rotated counter-clockwise around the axis of rotation 38, causing the second ball portion 22 to rotate. The strength of the c-spring 40 (Figure 1) is sufficient to rotate the first ball portion 20 with the second ball portion 22.

Referring now to Figure 4b, the apertured ball has rotated around the axis of rotation 38 and the throughbore 14 is closed but not sealed. At this point the no-go 52 engages with the stop surface 48, this can be seen more clearly in Figure 5, a cut-away side-view of part of the ball valve 10. This engagement prevents further rotation of the first ball portion 20 about the axis of rotation 38.

Referring now to Figure 4c, continued rotation of the second ball portion 22 about the axis of rotation 38, of sufficient magnitude to overcome the squeezing effect of the c-spring 40 (Figure 1), causes the leading edge 54 of the cam surface 42 to overcome a step 56 on the follower surface 44. This action axially displaces the first portion 20 of the apertured ball 18 from the axis of rotation and forms a seal between the sealing surface 26 of the sealing element 24 and the valve seat 16.

The second portion 22 continues to rotate until a second portion surface 58 engages a first portion surface 60 which prevents the second portion 22 from further rotation. The complete rotation of the second ball element spans 120°.

The inter-action of the cam surface 42 and the section 62 of the follower surface 44 maintains the seal between the sealing surface 26 of the sealing element 24 and the valve seat 16, and prevents the first portion 20 moving axially towards the second ball portion 22 under the action of c-spring 40.

Referring to Figure 6, comprising Figures 6a and 6b, there is shown a cut away side view of rotary actuator, generally indicated by reference numeral 70, for rotating the apertured ball 18 of Figure 1.
The rotary actuator 70 comprises a double acting hydraulic piston 72 disposed in the valve housing 12. Connected to the lower end 74 of the piston 72 is a link arm 76 via a pin jointed connection 78. The link arm 76 is eccentrically connected via a pin joint 80 to a large diameter hub 82. The hub 82 is concentrically connected to the end of the shaft portion 28 (not shown in Figure 6) .

The rotary actuator 70 includes an upper hydraulic fluid chamber 84 and a lower hydraulic fluid chamber 86. The upper hydraulic fluid chamber 84 is defined by the piston 72 and the housing 12, and is sealed by an upper ring seal 90 and a piston ring seal 92. The lower hydraulic fluid chamber 84 is defined by the piston 72 and the housing 12, and is sealed by a lower ring seal 94 and the piston ring seal 92.

Referring to Figure 6a, to rotate the apertured ball 18 from a throughbore open to a throughbore closed position, the lower piston chamber 86 is vented and hydraulic fluid is pumped into the upper piston chamber 84, permitting the piston 72 to move to the position shown in Figure 6b.

During the movement of the piston 72 to the position shown in Figure 6b, the link arm 76 maintains a constant distance between the piston end 74 and the pin joint 80, connecting the link arm 76 to the hub 82, forcing the hub 82 to rotate to the position shown in Figure 6b. Between in Figures 6a and 6b, the hub 82, and the second apertured ball portion 22, have rotated 120°; the degree of rotation required to engage the seal element 24 with the valve seat 16.

various modifications may be made to the embodiment hereinbefore described without departing from the scope of the invention. For example, it will be understood that although the valve seat 16 is shown machined into the surface of the housing 12, it could equally be formed on a separate seal seat which is inserted into the surface of the housing 12. Similarly, the sealing surface 26 which is defined by the seal element 24 could equally be defined by the outer surface of the first ball portion 20. Additionally, although the cam surface is shown associated with the second ball portion 22 and the follower surface 44 is shown associated with the first ball portion 20, this relationship could be reversed.

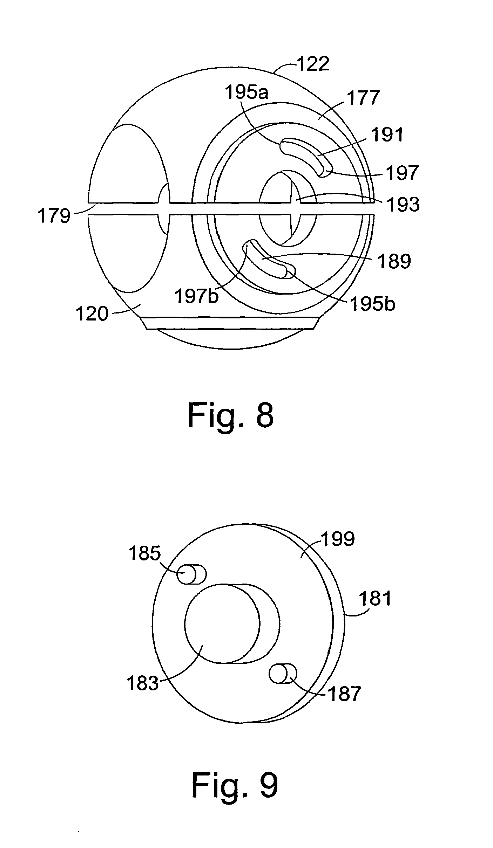

Figure 8 shows a perspective view of part of a ball valve, generally indicated by reference numeral 110, in accordance with an alternative embodiment of the present invention.

The ball valve 110 comprises an apertured ball 118 located within a housing 112 (shown in broken outline). The apertured ball 118 comprises a first portion 120 and a second portion 122, the first and second ball elements 120,122 are secured together by C-springs (not shown).

The first portion 120 includes a sealing element 124 with an annular, conical, sealing surface 126, the sealing element 124 is machined from Inconel 625, a corrosion resistant alloy and is mounted to the first portion 120. The sealing element 124 is adapted to engage a valve seat 116 located in the housing 112.

Located on a first side 177 of the apertured ball 118 is a camming plate 181.

The camming plate 181, best seen in Figure 9, includes a boss 183 and a pair of studs 185, 187 extending from a surface 199 of the camming plate 181.

The first portion 120 of the apertured ball 118 includes a first groove 189 and the second portion 122 of the apertured ball 118 includes a second groove 191. Each of the grooves 189, 191 is sized to receive one of the studs 185, 187. The boss 183 is received in an aperture 193 defined by the first and second ball portions 120, 122. The first groove 189 is arranged to be non-concentric with the aperture 193, whereas the second groove 191 is arranged to be concentric with the aperture 193.

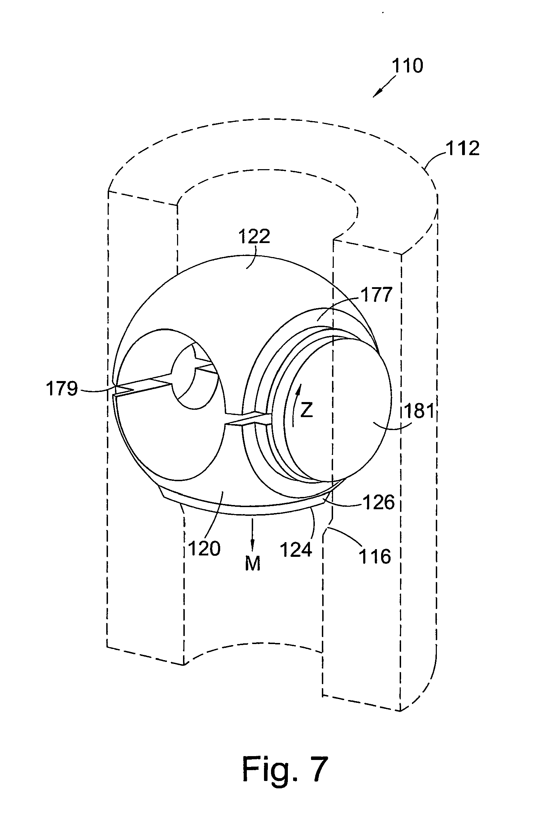

To activate the valve 110 from the throughbore open position to a throughbore closed position, a turning force is applied by an actuator (not shown) to a second side 179 of the apertured ball 118. Once the ball 118 is in the throughbore closed position the sealing element 124 is axially displaced to engage the valve seat 116 by applying a clockwise turning force (in the direction of arrow "z" on Figure 7) to the camming plate 181.

This turning force rotates the camming plate 181 and the studs 185, 187 move along the grooves 189, 191 from a first end 195a, 195b to a second end 197a, 197b.

As the second groove 191 is concentric with the aperture 193, the rotation of the camming plate 181 has no effect on the second portion 122. However, as the first groove 189 is non-concentric with the aperture 193, the rotation of the camming plate 181 and the movement of the stud 187 from the first end 195b to the second end 197b of the groove 189 causes the first ball portion 120 to move towards the valve seat 116, that is, in the direction of arrow "M" on Figure 7. The axial force generated causes the sealing element 124 to engage the valve seat 116 as for the first embodiment.

Those of skill in the art will also recognise that the above described embodiment of the invention provides a metal to metal sealing ball valve which can seal a conduit with minimal impact on the bore of the conduit in the open configuration. The ball valve also provides a known angular displacement of 120° between the throughbore fully open and the throughbore sealed positions permitting a high level of valve control.

## Claims

1. A ball valve (10) for sealing a conduit comprising:
a housing (12) having a throughbore (14) and a valve seat (16);
an apertured ball element (18) mounted within the housing, the apertured ball element being rotatable about an axis of rotation between a throughbore open and a throughbore closed position, the apertured ball element having a first portion (20) and a second portion (22) coupled together, said first and second portions being rotatable and moveable relative to each other, said first portion having a sealing surface (26) for engaging with said valve seat;
whereby, in use, in the throughbore closed position, the second portion is moveable relative to said first portion to engage with and axially displace the first portion from the axis of rotation towards the valve seat such that said sealing surface on the first portion of the apertured ball forms a seal with the valve seat.

2. The ball valve (10) of claim 1 wherein the second portion (22) is adapted to axially displace the first portion (20) from the axis of rotation by a further rotation of the second portion with respect to the first portion.

3. The ball valve (10) of either of claims 1 or 2 wherein the valve seat (16) and the sealing surface (26) on the first portion (20) of the aperture ball (18) is a metal.

4. The ball valve (10) of either of claims 1 or 2 wherein at least one of the valve seat (16) and the sealing surface (26) on the first portion (20) of the apertured ball (18) is a polymeric or elastomeric material.

5. The ball valve (10) of either of claims 1 or 2 wherein the sealing surface (26) is a combination of materials.

6. The ball valve (10) of claim 5 wherein the sealing surface on the first portion (20) of the apertured ball (18) comprises both a metal and a non-metal.

7. The ball valve (10) of any preceding claim wherein the sealing surface (26) of the first portion (20) of the apertured ball (18) is non-spherical.

8. The ball valve (10) of claim 7 wherein the sealing surface (26) of the first apertured ball portion (20) is substantially conical.

9. The ball valve (10) of any preceding claim wherein the sealing surface (26) of the first portion (20) of the apertured ball (18) is provided on an element mounted to the first apertured ball portion.

10. The ball valve (10) of claim 9 wherein the sealing surface element is a disc.

11. The ball valve (10) of any preceding claim wherein the valve seat (16) has a non-spherical surface.

12. The ball valve (10) of claim 11 wherein the valve seat surface is substantially conical.

13. The ball valve (10) of any preceding claim wherein the valve seat (16) is formed integrally with the housing (12).

14. The ball valve (10) of any of claims 1 to 12 wherein the valve seat (16) is releasably connected to the housing (12).

15. The ball valve (10) of claim 9 wherein the sealing surface element is releasably mounted to the first portion (20) of the apertured ball element (18).

16. The ball valve (10) of any preceding claim wherein each of the first portion (20) and the second portion (22) may comprise a plurality of parts.

17. The ball valve (10) of any preceding claim wherein the first and second portions (20,22) are connected by connection means (40).

18. The ball valve (10) of claim 17 wherein the connection means (40) is a c-spring (40).

19. The ball valve (10) of either of claims 17 or 18 wherein the first and second portions (20,22) are releasably connected.

20. The ball valve (10) of any preceding claim wherein the ball valve includes biasing means (40) to bias the first portion (20) towards the second portion (22).

21. The ball valve (10) of claim 20 wherein the biasing means (40) is a c-spring (40).

22. The ball valve (10) of claim 21 when dependent on claim 18 wherein the connecting c-spring (40) is also the biasing c-spring (40) .

23. The ball valve (10) of any preceding claim wherein the ball valve further includes rotation means (70,76) to rotate the apertured ball (18) between the throughbore open position and the throughbore closed position.

24. The ball valve (10) of claim 23 wherein the rotation means (70,76) is associated only with the second portion (22) of the apertured ball (18).

25. The ball valve (10) of any preceding claim wherein the second portion (22) is adapted to axially displace the first portion (20) by means of a cam surface (42) on one of the first or second portions engaging a follower surface (44) on the other of the first or second portions.

26. The ball valve (10) of claim 25 wherein the cam surface (42) is on the second portion (22) and the follower surface (44) is on the first portion (20).

27. The ball valve (10) of any of claims 1 to 24 wherein the second portion (22) is adapted to axially displace the first portion (20) by means of a separate camming plate (181), the separate camming plate having first and second pins (185,187) extending therefrom, the first pin engaging an annular slot (189) in the surface of the first apertured ball portion, and the second pin engaging an annular slot (191) in the surface of the second apertured ball portion.

28. A method of sealing a throughbore (14) through a housing (12) by an apertured ball valve (10), the method comprising the steps of:
rotating an apertured ball element (18) from a throughbore open position to a throughbore closed position;
rotating a second portion (22) of the apertured ball element relative to a first portion (20) of the apertured ball element and into engagement with said ball element first portion when in said throughbore closed position and axially displacing said first portion onto a valve seat (16).
whereby said first portion of the apertured ball element is urged into a sealing engagement with the valve seat.

## Patentansprüche

1. Kugelhahn (10) zum Abdichten einer Leitung, der Folgendes umfasst:
ein Gehäuse (12), das eine Durchgangsbohrung (14) und einen Ventilsitz (16) hat,
ein mit Öffnungen versehenes Kugelelement (18), das innerhalb des Gehäuses angebracht ist, wobei das mit Öffnungen versehene Kugdelement um eine Drehachse gedreht werden kann, zwischen einer Stellung mit offener Durchgangsbohrung und einer Stellung mit geschlossener Durchgangsbohrung, wobei das mit Öffnungen versehene Kugelelement einen ersten Abschnitt (20) und einen zweiten Abschnitt (22) hat, die aneinander gekoppelt sind, wobei der erste und der zweite Abschnitt im Verhältnis zueinander gedreht und bewegt werden können, wobei der erste Abschnitt eine Abdichtungsfläche (26) zum Ineinandergreifen mit dem Ventilsitz hat,
wobei, bei Anwendung, der zweite Abschnitt in der Stellung mit geschlossener Durchgangsbohrung im Verhältnis zu dem ersten Abschnitt bewegt werden kann, um mit dem ersten Abschnitt ineinanderzugreifen und ihn von der Drehachse aus zu dem Ventilsitz hin zu verschieben derart, dass die Abdichtungsfläche an dem ersten Abschnitt der mit Öffnungen versehenen Kugel eine Dichtung mit dem Ventilsitz bildet.

2. Kugelhahn (10) nach Anspruch 1, wobei der zweite Abschnitt (22) dafür eingerichtet ist, durch eine weitere Drehung des zweiten Abschnitts in Bezug auf den ersten Abschnitt den ersten Abschnitt (20) in Axialrichtung von der Drehachse aus zu verschieben.

3. Kugelhahn (10) nach einem der Ansprüche 1 oder 2, wobei der Ventilsitz (16) und die Abdichtungsfläche (26) an dem ersten Abschnitt (20) der mit Öffnungen versehenen Kugel (18) aus einem Metall bestehen.

4. Kugelhahn (10) nach einem der Ansprüche 1 oder 2, wobei wenigstens eine der Komponenten Ventilsitz (16) und Abdichtungsfläche (26) an dem ersten Abschnitt (20) der mit Öffnungen versehenen Kugel (18) aus einem Polymer- oder Elastomer-Material besteht.

5. Kugelhahn (10) nach einem der Ansprüche 1 oder 2, wobei die Abdichtungstläche (26) aus einer Kombination von Materialien besteht.

6. Kugelhahn (10) nach Anspruch 5, wobei die Abdichtungsfläche an dem ersten Abschnitt (20) der mit Öffnungen versehenen Kugel (18) sowohl ein Metall als auch ein Nichtmetall umfasst.

7. Kugelhahn (10) nach einem der vorhergehenden Ansprüche, wobei die Abdichtungstläche (26) des ersten Abschnitts (20) der mit Öffnungen versehenen Kugel (18) nicht-sphärisch ist.

8. Kugelhahn (10) nach Anspruch 7, wobei die Abdichtungsfläche (26) des ersten Abschnitts (20) der mit Öffnungen versehenen Kugel im Wesentlichen konisch ist.

9. Kugelhahn (10) nach einem der vorhergehenden Ansprüche, wobei die Abdichtungsfläche (26) des ersten Abschnitts (20) der mit Öffnungen versehenen Kugel (18) an einem Element bereitgestellt wird, das an dem ersten Abschnitt der mit Öffnungen versehen Kugel angebracht ist.

10. Kugelhahn (10) nach Anspruch 9, wobei das Abdichtungsflächenelement eine Scheibe ist.

11. Kugelhahn (10) nach einem der vorhergehenden Ansprüche, wobei der Ventilsitz (16) eine nicht-sphärische Oberfläche hat.

12. Kugelhahn (10) nach Anspruch 11, wobei die Ventilsitzoberfläche im Wesentlichen konisch ist.

13. Kugelhahn (10) nach einem der vorhergehenden Ansprüche, wobei der Ventilsitz (16) integral mit dem Gehäuse (12) geformt ist.

14. Kugelhahn (10) nach einem der Ansprüche 1 bis 12, wobei der Ventilsitz (16) lösbar mit dem Gehäuse (12) verbunden ist.

15. Kugelhahn (10) nach Anspruch 9, wobei das Abdichtungsflächenelement lösbar an dem ersten Abschnitt (20) der mit Öffnungen versehenen Kugel (18) angebracht ist.

16. Kugelhahn (10) nach einem der vorhergehenden Ansprüche, wobei sowohl der erste Abschnitt (20) als auch der zweite Abschnitt (22) mehrere Teile umfassen können.

17. Kugelhahn (10) nach einem der vorhergehenden Ansprüche, wobei der erste und der zweite Abschnitt (20, 22) durch Verbindungsmittel (40) verbunden sind.

18. Kugelhahn (10) nach Anspruch 17, wobei das Verbindungsmittel (40) eine C-Feder (40) ist.

19. Kugelhahn (10) nach einem der Ansprüche 17 oder 18, wobei der erste und der zweite Abschnitt (20, 22) lösbar verbunden sind.

20. Kugelhahn (10) nach einem der vorhergehenden Ansprüche, wobei der Kugelhahn Vorspannmittel (40) einschließt, um den ersten Abschnitt (20) zu dem zweiten Abschnitt (22) hin vorzuspannen.

21. Kugelhahn (10) nach Anspruch 20, wobei das Vorspannmittel (40) eine C-Feder (40) ist.

22. Kugelhahn (10) nach Anspruch 21, wenn abhängig von Anspruch 18, wobei die verbindende C-Feder (40) ebenfalls die vorspannende C-Feder (40) ist.

23. Kugelhahn (10) nach einem der vorhergehenden Ansprüche, wobei der Kugelhahn ferner Drehmittel (70, 76) einschließt, um die mit Öffnungen versehene Kugel (18) zwischen der Stellung mit offener Durchgangsbohrung und der Stellung mit geschlossener Durchgangsbohrung zu drehen.

24. Kugelhahn (10) nach Anspruch 23, wobei das Drehmittel (70, 76) nur mit dem zweiten Abschnitt (22) der mit Öffnungen versehene Kugel (18) verknüpft ist.

25. Kugelhahn (10) nach einem der vorhergehenden Ansprüche, wobei der zweite Abschnitt (22) dafür eingerichtet ist, den ersten Abschnitt (20) mittels einer Nockenfläche (42) an der einen der Komponenten erster oder zweiter Abschnitt, die eine Stößelfläche (44) an der anderen der Komponenten erster oder zweiter Abschnitt in Eingriff nimmt, in Axialrichtung zu verschieben.

26. Kugelhahn (10) nach Anspruch 25, wobei sich die Nockenfläche (42) an dem zweiten Abschnitt (22) befindet und sich die Stößelfläche (44) an dem ersten Abschnitt (20) befindet.

27. Kugelhahn (10) nach einem der Ansprüche 1 bis 24, wobei der zweite Abschnitt (22) dafür eingerichtet ist, den ersten Abschnitt (20) mittels einer gesonderten Eingriffsplatte (181) in Axialrichtung zu verschieben, wobei die gesonderte Eingriffsplatte einen ersten und einen zweiten Stift (185, 187) hat, die sich von der selben aus erstrecken, wobei der erste Stift einen ringförmigen Schlitz (189) in der Oberfläche des ersten Abschnitts der mit Öffnungen versehen Kugel in Eingriff nimmt und der zweite Stift einen ringförmigen Schlitz (191) in der Oberfläche des zweiten Abschnitts der mit Öffnungen versehen Kugel in Eingriff nimmt.

28. Verfahren zum Abdichten einer Durchgangsbohrung (14) durch ein Gehäuse (12) durch einen mit Öffnungen versehenen Kugelhahn (10), wobei das Verfahren die folgenden Schritte umfasst:
Drehen eines mit Öffnungen versehenen Kugelelements (18) von einer Stellung mit offener Durchgangsbohrung zu einer Stellung mit geschlossener Durchgangsbohrung,
Drehen eines zweiten Abschnitts (22) des mit Öffnungen versehenen Kugelelements im Verhältnis zu einem ersten Abschnitt (20) des mit Öffnungen versehenen Kugelelements und in Eingriff mit dem ersten Abschnitt des Kugelelements, wenn es sich in der Stellung mit geschlossener Durchgangsbohrung befindet, und Verschieben des ersten Abschnitts in Axialrichtung auf einen Ventilsitz (16),
wodurch der erste Abschnitt des mit Öffnungen versehenen Kugelelements in einen abdichtenden Eingriff mit dem Ventilsitz gedrückt wird.

## Revendications

1. Clapet à bille (10) pour établir l'étanchéité d'un conduit, comprenant :
un boîtier (12) comportant un alésage de passage (14) et un siège du clapet (16) ;
un élément de bille à ouvertures (18) monté dans le boîtier, l'élément de bille à ouvertures pouvant tourner sur un axe de rotation entre une position ouverte de l'alésage de passage et une position fermée de l'alésage de passage, l'élément de bille à ouvertures comportant une première partie (20) et une deuxième partie (22) accouplées, lesdites première et deuxième parties pouvant tourner et se déplacer l'une par rapport à l'autre, ladite première partie comportant une surface d'étanchéité (26) destinée à s'engager dans ledit siège du clapet ;
dans lequel, dans la position fermée de l'alésage de passage, la deuxième partie peut ainsi se déplacer par rapport à ladite première partie en vue d'un engagement dans la première partie et d'un déplacement de celle-ci à partir de l'axe de rotation vers le siège du clapet, de sorte que ladite surface d'étanchéité sur la première partie de la bille à ouvertures forme un joint d'étanchéité avec le siège du clapet.

2. Clapet à bille (10) selon la revendication 1, dans lequel la deuxième partie (22) est adaptée pour déplacer axialement la première partie (20) à partir de l'axe de rotation, par une rotation ultérieure de la deuxième partie par rapport à la première partie.

3. Clapet à bille (10) selon les revendications 1 ou 2, dans lequel le siège du clapet (16) et la surface d'étanchéité (26) sur la première partie (20) de la bille à ouvertures (18) sont composés de métal.

4. Clapet à bille (10) selon les revendications 1 ou 2, dans lequel au moins un élément, le siège du clapet (16) ou la surface d'étanchéité (26) sur la première partie (20) de la bille à ouvertures (18), est composé d'un matériau polymère ou élastomère.

5. Clapet à bille (10) selon les revendications 1 ou 2, dans lequel la surface d'étanchéité (26) est composée d'une combinaison de matériaux.

6. Clapet à bille (10) selon la revendication 5, dans lequel la surface d'étanchéité sur la première partie (20) de la bille à ouvertures (18) comprend un métal et un non métal.

7. Clapet à bille (10) selon l'une quelconque des revendications précédentes, dans lequel la surface d'étanchéité (26) de la première partie (20) de la bille à ouvertures (18) est non sphérique.

8. Clapet à bille (10) selon la revendication 7, dans lequel la surface d'étanchéité (26) de la première partie de la bille à ouvertures (20) est pratiquement conique.

9. Clapet à bille (10) selon l'une quelconque des revendications précédentes, dans lequel la surface d'étanchéité (26) de la première partie (20) de la bille à ouvertures (18) est agencée sur un élément monté sur la première partie de la bille à ouvertures.

10. Clapet à bille (10) selon la revendication 9, dans lequel l'élément de la surface d'étanchéité est un disque.

11. Clapet à bille (10) selon l'une quelconque des revendications précédentes, dans lequel le siège du clapet (16) comporte une surface non sphérique.

12. Clapet à bille (10) selon la revendication 11, dans lequel la surface du siège du clapet est pratiquement conique.

13. Clapet à bille (10) selon l'une quelconque des revendications précédentes, dans lequel le siège du clapet (16) est formé d'une seule pièce avec le boîtier (12).

14. Clapet à bille (10) selon l'une quelconque des revendications 1 à 12, dans lequel le siège du clapet (16) est connecté de manière amovible au boîtier (12).

15. Clapet à bille (10) selon la revendication 9, dans lequel l'élément de la surface d'étanchéité est monté de manière amovible sur la première partie (20) de l'élément de bille à ouvertures (18).

16. Clapet à bille (10) selon l'une quelconque des revendications précédentes, dans lequel chaque partie, la première partie (20) et la deuxième partie (22), peut comprendre plusieurs parties.

17. Clapet à bille (10) selon l'une quelconque des revendications précédentes, dans lequel les première et deuxième parties (20, 22) sont connectées par un moyen de connexion (40).

18. Clapet à bille (10) selon la revendication 17, dans lequel le moyen de connexion (40) est un ressort en c (40).

19. Clapet à bille (10) selon les revendications 17 ou 18, dans lequel les première et deuxième parties (20, 22) sont connectées de manière amovible.

20. Clapet à bille (10) selon l'une quelconque des revendications précédentes, dans lequel le clapet à bille englobe un moyen poussoir (40) pour pousser la première partie (20) vers la deuxième partie (22).

21. Clapet à bille (10) selon la revendication 20, dans lequel le moyen poussoir (40) est un ressort en c (40).

22. Clapet à bille (10) selon la revendication 21, dépendant de la revendication 18,
dans lequel le ressort de connexion en c (40) constitue également le ressort poussoir en c (40).

23. Clapet à bille (10) selon l'une quelconque des revendications précédentes, dans lequel le clapet à bille englobe en outre un moyen de rotation (70, 76) pour faire tourner la bille à ouvertures (18) entre la position ouverte de l'alésage de passage et la position fermée de l'alésage de passage.

24. Clapet à bille (10) selon la revendication 23, dans lequel le moyen de rotation (70, 76) est associé uniquement à la deuxième partie (22) de la bille à ouvertures (18).

25. Clapet à bille (10) selon l'une quelconque des revendications précédentes, dans lequel la deuxième partie (22) est adaptée pour déplacer axialement la première partie (20) par l'intermédiaire d'une surface à came (42) lors de l'engagement de l'une des première ou deuxième parties dans une surface à galet de came (44) sur l'autre des première et deuxième parties.

26. Clapet à bille (10) selon la revendication 25, dans lequel la surface à came (42) est agencée sur la deuxième partie (22), la surface à galet de came (44) étant agencée sur la première partie (20).

27. Clapet à bille (10) selon l'une quelconque des revendications 1 à 24, dans lequel la deuxième partie (22) est adaptée pour déplacer axialement la première partie (20) par l'intermédiaire d'une plaque à came séparée (181), comportant des première et deuxième chevilles (185, 187) à extension, la première cheville s'engageant dans une fente annulaire (189) dans la surface de la première partie de la bille à ouvertures, et la deuxième cheville s'engageant dans une fente annulaire (191) dans la surface de la deuxième partie de la bille à ouvertures.

28. Procédé d'établissement de l'étanchéité d'un alésage de passage (14) traversant un boîtier (12) par l'intermédiaire d'un clapet à bille à ouvertures (10), le procédé comprenant les étapes ci-dessous :
rotation de l'élément de bille à ouvertures (18) d'une position ouverte de l'alésage de passage vers une position fermée de l'alésage de passage ;
rotation d'une deuxième partie (22) de l'élément de bille à ouvertures par rapport à une première partie (20) de l'élément de bille à ouvertures et engagement de celle-ci dans ladite première partie de l'élément à bille dans ladite position fermée de l'alésage de passage, et déplacement axial de ladite première partie sur un siège du clapet (16) ;
ladite première partie de l'élément de bille à ouvertures étant ainsi engagée par poussée et de manière étanche dans le siège du clapet.
